# EUROPEAN PATENT APPLICATION

(11) **EP 4 152 768 A1**
(43) Date of publication of application: **22.03.2023**
(21) Application number: 22206746.4
(22) Date of filing: 07.04.2017
(51) Int. Cl.: H04R 3/12, H04L 12/28, G11B 27/10, H04N 21/43

(54) **SLAVE REQUESTED AUDIO SYNCHRONIZATION**

(30) Priority: 11.04.2016 EP 16164660
(62) Divisional of application: 17717123.8
(71) Applicant: Roku, Inc., San Jose, CA 95110 (US)
(72) Inventor: REESE, Bjørn, 8210 Aarhus V (DK); FLEISCHER, Paul, 8210 Aarhus V (DK)
(74) Representative: Mewburn Ellis LLP

(57) **Abstract**

The invention provides a method for synchronizing playback of audio and/or video from a source in a network of a plurality of separate devices in a computer network session. Especially, separate audio devices arranged for playing respective channels of a multi-channel audio stream. A master device serves to provide synchronization information regarding the audio and/or video playback to one or more slave devices. The slave device transmits a request for synchronization information to the master device. Thus, the slave device initiates synchronization rather than the master device. The master device transmits in response synchronization information to the slave device, and by receipt of this information, the slave device can synchronize playback of audio and/or video accordingly. Preferably, the synchronization information is based on audio codec clock based on Time Synchronization Function (TSF) time, e.g. by determining an offset between master and slave audio codec clocks. Since the slave device requests synchronization, the slave device can decide when to request synchronization according to one or more criteria, and the master device is relieved from the task of keeping track on when to transmit synchronization information to a plurality of slave devices.

## Description

### FIELD OF THE INVENTION

The present invention relates to the field of synchronized playback of audio or video between devices in a peer-to-peer computer network system, e.g. in a wi-fi network. Specifically, the invention aims at minimizing timing mismatch between separate devices, e.g. for stereo playback.

### BACKGROUND OF THE INVENTION

In synchronized playback of audio and/or video between a plurality of devices in a peer-to-peer computer network system, e.g. separate loudspeaker devices receiving an audio stream via a wi-fi network, the devices can participate in coordinated sessions, where the participating devices can play synchronously. The participating devices can be located within or across several rooms.

In order to play synchronously, the participating devices need to agree on the playback time and pace. This is done by electing one of the devices as a leader or master device, and the other devices, slave devices, will adjust their playback timing to that of the master device.

For multi-room synchronous playback the synchronization timing is not especially critical. However, in case of two or more separate loudspeaker devices playing respective audio channels of an audio stream, e.g. left and right stereo channels, the synchronization timing is critical, since for stereo listening, left-right sound timing is crucial for correct playback of spatial audio effects. E.g. a phantom sound source in the centre between two stereo loudspeakers can be reproduced when the two loudspeakers play simultaneously, i.e. with zero time difference. However, introducing an inter-channel time difference of 1-2 ms, the stereo image will be significantly distorted, and the resulting phantom source will be localized near the first playing loudspeaker, also known in the art of audio engineering as the precedence effect. Surround sound setups with each channel reproduced by separately synchronized loudspeaker devices can be even more critical with respect to inter-channel time difference. For reproduction of binaural recordings (3D audio) with separately synchronized left and right channels, e.g. in a headphone or closely spaced stereo loudspeakers, the inter-channel time difference is extremely important for correct 3D audio imaging. A time difference of about 600 µs corresponds to the inter-aural time difference between left and right ears of a human, and thus for real life listening this time difference corresponds to a sound source placed directly to the side of the listener. Therefore, for 3D audio playback, a maximum inter-channel time difference of a maximum of 100 µs is normally considered acceptable to avoid disturbance of stereo imaging effect in a stereo loudspeaker setup.

Such low inter-channel time difference for multi-channel audio synchronization is difficult to achieve in traditional wi-fi streaming. Especially, in a practical wi-fi environment, the actual synchronization will vary over time, thus also the resulting inter-channel time difference. Such temporally varying inter-channel time difference will further decrease spatial audio localization performance, e.g. by providing a spatial blurring.

In "Inter-destination multimedia synchronization: schemes, use cases and standardization", MULTIMEDIA SYSTEMS, Springer, Berlin, Vol. 18, No. 6, 10 July 2012, pp. 459-482, and subsequently in "Inter- Destination Media Synchronization (IDMS) Using the RTP Control Protocol (RTCP)", RFC 7272, DOI 10.17487/RFC7272, June 2014, master and slave synchronization schemes are described. The schemes involve Network Time Protocol (NTP) based synchronization, where a synchronization master transmits an NTP based reference once all slave devices have requested synchronization. The rate of master synchronization responses is determined by the slave with the slowest request rate.

WO 2008/144842 A1 describes a synchronization scheme, where all slave devices request synchronization individually to a synchronization master. Each slave device receives a reference time from the master, and the slave then calculates a time deviation accordingly, in order to synchronize to the master time.

### SUMMARY OF THE INVENTION

Thus, according to the above description, it is an object of the present invention to provide a method for improved synchronization in an audio and/or video streaming system. Especially, a method for reducing synchronization time difference between separate devices in a streaming session, more specifically so as to allow a low inter-channel time difference when separate audio devices simultaneously playback respective channels of a multi-channel audio stream, e.g. stereo, binaural, or surround sound setups. Preferably, the synchronization is capable of providing a time difference of a maximum of such as 100-200 µs between devices in a wi-fi streaming session. Still further, the method should preferably also be capable of reducing time variation in this time difference.

In a first aspect, the invention provides a method for synchronizing playback of audio and/or video, preferably comprising audio, from a source in a network of a plurality of separate devices in a computer network session, wherein the plurality of separate devices comprises a master device and at least one slave device, wherein the master device serves to provide synchronization information regarding the audio and/or video playback to the at least one slave device, wherein the method comprises
- at least one slave device reading a slave audio codec clock at a slave reference time related to a Time Synchronization Function (TSF) time, said clock of the audio codec being involved in transmitting audio in the network, and transmitting data indicative of the slave audio codec clock to the master device along with a request for synchronization information to the master device,
- receiving said data indicative of the slave audio codec clock at a slave reference time by the master device, and comprising the master device reading, at a master reference time, a master audio codec clock related to a TSF time,
- comprising the master device calculating an estimated slave audio codec clock corresponding to the master reference time, and the master device calculating an estimated offset of audio codec clock between the master device and said at least one slave in response to the calculated estimated slave audio codec clock corresponding to the master reference time and the master audio codec clock, and transmitting synchronization information comprising data based on said estimated offset of audio codec clock to said at least one slave device in response to said request,

- receiving said synchronization information by said at least one slave device, and
- synchronizing playback of audio and/or video by said at least one slave devices in accordance with said offset of audio codec clock, so as to minimize playback timing error related to the master device.

Such method where the slave device is responsible for requesting synchronization is advantageous for obtaining a highly reliable synchronization with a low time difference between separate audio devices, being master and/or slave audio devices, playing respective channels of a multi-channel audio stream in one room. Especially, the slave device(s) may be programmed to determine when to request synchronization, e.g. to reduce the need for synchronization requests to when a predetermined criteria is fulfilled, and thus where it is determined that the synchronization according to a criterion is likely to result in an improved synchronization, and thus a reduced time difference between master and/or devices playing the same audio stream.

Especially, it can be implemented that the slave device requests more frequent synchronization in case it plays one channel of a multi-channel audio together with one or more devices, being either slave or master devices. Thus, it is advantageous that the slave device is capable of requesting synchronization information from the master device, since the slave device can then request for synchronization information according to a strategy which is relevant for the slave device. E.g. this may include increasing the frequency of requesting synchronization information, if the slave device calculates statistics on observed synchronization information from the master device over time that the resulting time difference varies more than a threshold value, since this observation may indicate unstable network conditions influencing synchronization performance and thus also time difference between audio device playing back the same audio stream simultaneously.

Further, the slave device may take into account various conditions relevant for the slave device itself which may influence the need for requesting synchronization information from the master device, e.g. if the slave device is a portable device, and it is detected by a sensor in the slave device that the slave device is being transported, then the slave device may be programmed to request synchronization more frequently. I.e. local conditions influencing the slave device which is not normally known by the master device.

Still further, it is advantageous that the estimated offset of audio codec clock is calculated by the master device and sent to slave device. Hereby, the master device may keep track on the size and time variation of offset of audio coded clock for the individual slave devices connected to the master device. Especially, the master device may utilize this information to compensate its own clock to match the slave devices, if it is found that the estimated offset of audio codec clock for all of or most of the connected slave devices is high or increases as a function of time. This is especially advantageous in a synchronization scheme which allows dynamical master allocation, i.e. where one of the slave devices can be appointed as a new master device. In such scheme, the current master device may appoint one of the slave device as a new master device, if the current master device estimates that this slave device has an audio codec clock which provides a better match to the other slave devices than its own clock - based on the observed estimated offset of audio codec clock for the plurality of slave devices.

Even further, the master device can decide, based on observed estimated offset of audio codec clock, that one or more of the slave devices should be disconnected or muted, it the master device detects a poor synchronization of the slave device. This can be done if the master device has calculated estimated offset of audio codec clock for the slave device which exceeds a predetermined value, and/or if the master device has calculated estimated offset of audio codec clock varying over time more than a predefined statistical value.

The slave device may further be capable of increasing its synchronization request frequency in case it acts to play a channel of a multi channel audio stream, e.g. a stereo, binaural of surround sound audio stream. Still further, in such case, the slave device may be programmed to search for an additional master device, and to request synchronization information from such additional master device, so as to provide a more reliable synchronization information. Especially, the slave device may further communicate synchronization information with another slave device or master device playing another channel of the multi-channel audio stream. Especially, the slave device may be programmed to select a master device between a plurality of possible master devices to synchronize to, by determining one or more parameters of network quality of transmission for a plurality of possible master devices, and in response selecting to synchronize to the master device providing the highest network quality. Hereby, the most reliable synchronization can be provided, thus also resulting in the lowest inter-channel time difference. This may e.g. comprise transmitting data to and receiving data from the plurality of master devices, and determining for each master device, a value indicating a measure of jitter, and in response selecting to synchronize to the master device with the lowest value indicating measure of jitter. Of course, the slave device may be programmed to determine one or more alternative and/or additional network quality parameters for the selection of the master device to finally decide to synchronize to.

The method can easily be implemented in existing TCP based network protocols, since the necessary data for synchronization request and synchronization information can easily be transmitted within existing protocols.

Still further, the method is advantageous, since the master device is only required to transmit synchronization information on request from a slave device. Thereby, the tasks of the master device is relaxed compared to synchronization methods, where the master device is responsible of determining when to transmit synchronization information. This allow one master device to be capable of handling more slave devices, and/or it allow the processing power of the master device to be limited, thereby allowing low cost devices to act as master devices. Further, the master device does not need to spend resources for any timers to keep track on when to initialize a synchronization sequence. Instead, this task is carried out by the slave device.

In the following preferred features and embodiments will be described.

Using TSF time allows a high degree of synchronization precision, however of course limited by the precision of the hardware clock available in the master device.

The synchronization information is based on an audio clock and/or video clock involved in the playback of audio and/or video, i.e. based on a clock of the audio codec involved in transmitting audio in the network. Especially, when combined with a TSF time read both at the master device side and the slave device side, a high synchronization precision can be obtained.

The at least one slave device may operate according to a predetermined scheme for determining when to transmit a request for synchronization to the master device. Especially, the slave device is arranged to evaluate one or more parameters and determine when to transmit a request for synchronization in accordance with the one or more parameters. Especially, the slave device may be arranged to detect audio codec clock offset data received from the master device over time, and further be arranged to determine a time between synchronization requests accordingly. Especially, wherein the slave device may be arranged to increase synchronization request frequency in case the audio codec clock offset is detected to vary over time by more than a specified value. This allows the slave devices to individually to provide an adaptive request for synchronization rate which takes into account the actual synchronization conditions, also taking into account variation in these conditions.

The master device may be arranged to collect audio codec clock offset data transmitted to a plurality of slave devices, and to calculate a statistical measure based thereon. Especially, the master device may be arranged to adjust its clock according to said statistical measure. Especially, the master device may be arranged to detect audio codec clock offset data transmitted to one slave device over time and to calculate a statistical measure for said slave device accordingly. Especially, the master device may be arranged to determine to disconnect, or mute, said slave device from the network in response to said calculated statistical measure for said slave device, such as if the statistical measure exceeds a predetermined value. Especially, the master device may be arranged to store data indicative of audio codec clock offset data transmitted to a plurality of slave devices, such as a plurality of data transmitted to each of the plurality of slave devices over a period of time. Especially, the master device may be arranged to transmit said stored data to an external device. Especially, the master device may be arranged to transmit said stored data to one of the plurality of slave devices, e.g. prior to appointing or electing one of the slave devices as a new master device in the session. Such storing or detecting estimated audio codec clock offset over time for one or all of the connected slave devices, allows the master device to monitor the state of synchronization in the session.

Especially, the calculation of an estimated offset of the audio codec clock between the master device and the slave device may comprise estimating latency time in transmission from the slave device to the master device, such as estimating the latency as a difference in TSF time read by at the slave at the slave reference time and the master reference time read by the master device.

It may be preferred that the master device transmits synchronization information only upon request from a slave device. Hereby, the task of the master device is relaxed compared to synchronization schemes where the master device is responsible for transmitting synchronization information to a plurality of slave device in a streaming session.

In an embodiment, the method comprises transmitting a request for synchronization information from said at least one slave device to a plurality of master devices, and synchronizing playback of audio and/or video by said at least one slave device in accordance with a combination of synchronization information received from the plurality of master devices. Hereby, the synchronization can be even more precise with a low time difference between several devices playing respective channels of an audio stream.

The method may comprise computing by said at least one slave devices at least one criterion value, and determining to transmit a request for synchronization if the criterion value exceeds a predetermined threshold. As already mentioned, this allows the slave device to take into account one or more conditions local to the slave device for determining when to request synchronization information. Further, the slave device may perform statistical calculations on a series of synchronization information data received from the master device, and based on such statistics e.g. a synchronization request rate may be increased in case the statistical results reveal that an audio clock offset between the slave device and the master device vary significantly over time. Especially, the rate of synchronization requests may be increased in case the slave device plays back one channel of a multi-channel audio stream, so as to improve synchronization precision, especially playback time difference to other devices playing back other channels of the same multi-channel audio stream.

It is to understood that the method according to the first aspect forms part of a more general method for receiving streamed audio and/or video in a packet network, as known in the art. Especially, the method may comprise a slave device identifying a master device of a streaming session. Further, the method may comprise the slave device adjusting its audio and/or video playback in accordance with the synchronization information in the form of an audio clock offset between the master device and the slave devices.

A slave device may specifically request synchronization by transmitting to the master device data indicating a snapshot of the TSF clock (T(to)) at a time (to) as well as the audio codec clock (As(to)) of the slave device at the same time (to).

It is to be understood that the master device may provide master device may act as the source for providing a stream of audio and/or video. Alternatively, the source for providing the stream of audio and/or video is a device which is not part of the master device or any one of the slave devices.

The master device may be the major synchronization source itself. However, the master device may itself synchronize to a main master device. E.g. the main master device may be a TV set displaying the video part of a TV transmission, where a master device is in the form of a wireless active loudspeaker arranged to playback one stereo channel audio of the TV transmission, whereas a slave device is another wireless active loudspeaker arranged to playback the opposite stereo channel audio of the TV transmission.

In a second aspect, the invention provides a protocol for controlling a plurality of separate devices in a computer network, wherein one of the separate devices serves as a master device in a session for playback of audio and/or video from a source in a synchronized manner, wherein the master device serves to provide synchronization information regarding the audio and/or video playback to separate slave devices in the computer network session, wherein the protocol implemented in each of the separate slave devices is provided in accordance with the first aspect.

In a third aspect, the invention provides a computer executable program code arranged to cause an audio and/or video device to act as a master device or as a slave device (or both act as a master device and slave device) according to the method of the first aspect. The program code may be present on a tangible medium, e.g. a memory card or the like, or it may be present on a server for downloading via the internet. Especially, the program code may be stored on an electronic chip, e.g. a dedicated audio chip and/or a dedicated wi-fi communication chip.

In a fourth aspect, the invention provides a computer executable program code arranged to implement the protocol according to the second aspect, in a device comprising a processor and a network interface. Especially, such protocol can be stored on an electronic chip, e.g. a dedicated audio chip and/or a dedicated wi-fi communication chip.

In a fifth aspect, the invention provides an audio device comprising a processor and a network interface arranged to receive audio data via a computer network from a source and to playback an acoustic signal accordingly in a synchronized manner in response to synchronization information from a master device, wherein the processor is programmed to operate according to the method according to the first aspect. Especially, the audio device may be a stand-alone active portable or stationary loudspeaker device comprising a cabinet with a loudspeaker arranged to generate an acoustic signal in response to one or more audio channels of audio data. Especially, the device may be an audio device, such as a stand alone active loudspeaker. The device may also be any other type of device with audio and/or video capabilities, e.g. a TV set.

In a sixth aspect, the invention provides a system comprising a plurality of audio devices according to the fifth aspect, wherein a first device is arranged to playback a first audio channel of the audio data, and wherein a second audio device is arranged to playback a second audio channel of the audio data, such as the first audio device being a slave device and the second audio device being a master device, such as both of the first and second audio devices being slave devices.

In a seventh aspect, the invention provides an electronic chip programmed to allow a device to operate according to protocol according to the third aspect. Especially, such electronic chip may further comprise programmed instructions related to audio and/or wi-fi communication protocols.

It is appreciated that the same advantages and embodiments described for the first aspect apply as well for the second, third, fourth, fifth, sixth, and seventh aspects. Further, it is appreciated that the described embodiments can be intermixed in any way between all the mentioned aspects.

### BRIEF DESCRIPTION OF THE FIGURES

The invention will now be described in more detail with regard to the accompanying figures of which
Fig. 1 shows an example of an audio and video streaming where a TV set plays back video, while serving as a master device for two active loudspeaker which playback respective left and right stereo channels of the stereo audio stream,
Fig. 2 shows a preferred synchronization method and calculation of synchronization information to be transmitted, initiated by a master device requesting the synchronization information, and
Fig. 3 illustrates steps of a preferred method embodiment.

The figures illustrate specific ways of implementing the present invention and are not to be construed as being limiting to other possible embodiments falling within the scope of the attached claim set.

### DETAILED DESCRIPTION OF THE INVENTION

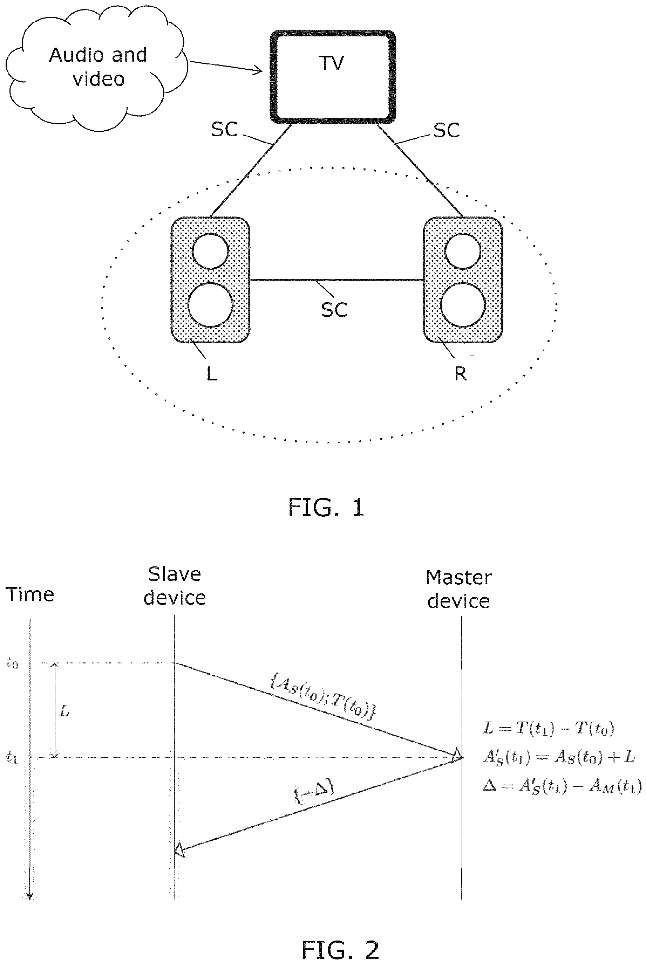

Fig. 1 shows an example of application of the synchronization method where a TV set acts as a master device for playback of left and right stereo channels by respective separate active audio loudspeaker devices L, R each with their own wireless interface for receiving a wireless audio stream. This is an example of where the synchronization method according to the invention can be utilized to improve stereo imaging.

The audio stream is received by the loudspeaker devices L, R in wireless form via a wi-fi network in a network session (not indicated in Fig. 1), whereas the synchronization communication SC between the master device in the form of the TV set and the slave devices in the form of the stereo loudspeakers L, R is indicated. The TV set acts as master device, i.e. it serves to provide synchronization information SC regarding the audio playback to the two stereo loudspeakers L, R acting as slave devices.

Each loudspeaker L, R and the TV set comprise respective processors programmed to communicate according to a communication protocol in accordance with the invention. Especially, the loudspeakers L, R are arranged to receive the audio stream and to play left or right channel accordingly as an acoustic signal in accordance with an audio codec clock.

The synchronization method with the loudspeakers L, R as slave devices and the TV set as master device comprises transmitting a request for synchronization information from one of the loudspeakers L, R to the TV set comprising data indicating the loudspeaker's L, R audio codec clock based on TSF time. The TV set in response transmits synchronization information back to the requesting loudspeaker L, R, preferably synchronization information comprising data indicating a TSF time based offset between the TV set audio codec clock and the loudspeaker L, R audio codec clock. The loudspeaker L, R having requested synchronization, receives the synchronization information in response, and uses the data indicated therein for synchronizing playback of the audio channel in the audio stream in accordance with the data indicated in the synchronization information. Hereby, a reliable and tight left and right audio channel synchronization can be obtained, thus providing a stereo playback with correct and stable stereo imaging.

To possibly further improve synchronization between left loudspeaker L and right loudspeaker R, it is indicated that the synchronization method may include an option to allow the two loudspeakers L, R to search for improved synchronization. E.g. the loudspeakers may alternatively or additionally be programmed to select to synchronize to each other, i.e. to elect one to act as a master device. This option is indicated by synchronization information SC between the two loudspeakers L, R. The protocol or synchronization method may include the option to search for a possibly more reliable master device to synchronize to, in order to obtain a further minimization of time error between left and right channel playback. In case of a stereo loudspeaker pair L, R as in Fig. 1, the method may comprise the left loudspeaker L searching for the right loudspeaker L, and to evaluate synchronization quality of that loudspeaker R, and in case it is evaluated according to one or more parameters to provide superior synchronization quality to the currently selected master device, it may elect the right loudspeaker R as a new master device.

Fig. 2 shows a preferred scheme for providing synchronization information in the form of an audio codec clock offset between master device and slave device, based on TSF time T(t).

Basically, the purpose of the synchronization measurements is to ensure that the slave device audio codec clock As is as close as possible to the master audio codec clock A_{M}. In other words, the purpose is to reduce audio playback time offset between the two devices in spite the fact that there is a transmission latency L in the transmission of data over the network from the slave device to the master device. This transmission latency may even be different for each transmission way, and it is generally also time varying.

The slave device requests synchronization at time to by transmitting to the master device data indicating a snapshot of the TSF clock T(t₀) and slave device audio codec clock As(to) at the same time, a slave reference time, t₀. When this snapshot is received by the master device, the master device reads, at master reference time t₁, its own snapshot of the TSF clock T(t₁) as well as the master audio codec clock A_{M}(t₁). As the slave device snapshot is sent over the network, the transmission latency L needs to be taken into account. This latency L is typically in the order of several milliseconds, and can be calculated using the TSF clock, i.e. as L = T(t₁) - T(t₀). The latency L means that the two audio codec clock snapshots As(to) and A_{M}(t₁) are not directly comparable because they have been taken at different times t₀, t₁. The master device can therefore estimate the slave audio codec clock As at time t₁ by calculating A's(t₁) as As(to), which is received from the slave device, plus the transmission latency L.

Finally, the difference or time offset Δ between the estimated slave audio codec clock and the actual master audio codec clock can be calculated as an indication of how aligned the two audio codec clocks are. This time offset Δ, or data indicative of the time offset Δ, can be transmitted from the master device to the slave device as synchronization information which the slave device can then use to synchronize its audio playback to.

It is to be understood that to further release the master device from computational tasks, the synchronization information may instead of data indicative of the time offset Δ directly, comprise data indicative of T(t₁) and A_{M}(t₁), which will allow the slave device to calculate the time offset Δ itself. However, still it is preferred that the master device is capable of tracking time offsets for one of, for more of, or even for all slave devices in a session, so as to allow the master device to monitor the general state or quality of synchronization in the network session, and possibly take actions accordingly. Such actions may include disconnecting or muting slave devices with poor synchronization performance, or the master device may decide to hand over the synchronization responsibility or elect one of the slave devices as a new master device, if it is found that this slave device provides a synchronization which, compared to the master itself, is is better accordance with the other slave devices. This decision is preferably based on monitoring the estimated time offsets Δ over a period of time for all slave devices in a session.

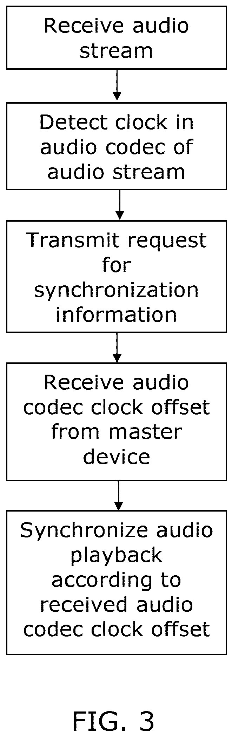

Fig. 3 shows an example of steps of a preferred method embodiment for being implemented on an audio slave device. For a slave device arranged to playback an audio stream in timing synchronization with a master device, the method preferably comprises receiving the audio stream, and detecting a clock in the audio codec of the audio stream. To be able to synchronize to the master device, the slave device transmits a request for synchronization information to the master device. In response, the slave device receives synchronization information comprising data indicative of an audio codec clock offset from the master device. The slave device then synchronizes its audio playback according to the received audio codec clock offset, so as to minimize its playback timing error.

The audio codec clock offset is determined based on TSF based times read by the slave and master devices.

The slave device preferably comprises operating according to a predetermined scheme for determining when to transmit a request for synchronization. Of course, the slave device preferably transmits a request for synchronization upon initiating playback, however it may be arranged to evaluate one or more parameters and determine when to transmit a request for synchronization in accordance with the one or more parameters. E.g. the slave device may monitor audio codec clock offset over time, and to determine time between synchronization requests accordingly. Preferably, the slave device is arranged to increase the synchronization request frequency in case the audio codec clock offset varies significantly over time, thereby indicating the need for a more frequent synchronization to provide a stable playback synchronization.

To sum up, the invention provides a method for synchronizing playback of audio and/or video from a source in a network of a plurality of separate devices in a computer network session. Especially, separate audio devices arranged for playing respective channels of a multi-channel audio stream. A master device serves to provide synchronization information regarding the audio and/or video playback to one or more slave devices. The slave device transmits a request for synchronization information to the master device. Thus, the slave device initiates synchronization rather than the master device. The master device transmits in response synchronization information to the slave device, and by receipt of this information, the slave device can synchronize playback of audio and/or video accordingly. Preferably, the synchronization information is based on audio codec clock based on Time Synchronization Function (TSF) time, e.g. by determining an offset between master and slave audio codec clocks. Since the slave device requests synchronization, the slave device can decide when to request synchronization according to one or more criteria, and the master device is relieved from the task of keeping track on when to transmit synchronization information to a plurality of slave devices.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

The following numbered clauses, describing aspects of the invention, are part of the description.
1. A method for synchronizing playback of audio and/or video from a source in a network of a plurality of separate devices in a computer network session, wherein the plurality of separate devices comprises a master device and at least one slave device, wherein the master device serves to provide synchronization information regarding the audio and/or video playback to the at least one slave device, wherein the method comprises
   - at least one slave device reading a slave audio codec clock at a slave reference time (to) related to a Time Synchronization Function time, said clock of the audio codec being involved in transmitting audio in the network, and transmitting data indicative of the slave audio codec clock (As(to), T(to)) to the master device along with a request for synchronization information to the master device,
   - receiving said data indicative of the slave audio codec clock at a slave reference time (As(to), T(to)) by the master device, and comprising the master device reading, at a master reference time (t₁), a master audio codec clock (A_{M}(t₁)) related to a Time Synchronization Function time,
   - comprising the master device calculating an estimated slave audio codec clock (A'ₛ(t₁)) corresponding to the master reference time (t₁), and the master device calculating an estimated offset of audio codec clock (Δ) between the master device and said at least one slave in response to the calculated estimated slave audio codec clock (A'ₛ(t₁)) corresponding to the master reference time (t₁) and the master audio codec clock (A_{M}(t₁)), and transmitting synchronization information comprising data based on said estimated offset of audio codec clock (Δ) to said at least one slave device, in response to said request,
   - receiving said synchronization information by said at least one slave device, and
   - synchronizing playback of audio and/or video by said at least one slave devices in accordance with said offset of audio codec clock (Δ) , so as to minimize playback timing error related to the master device.
2. The method according to clause 1, wherein said at least one slave device operates according to a predetermined scheme for determining when to transmit a request for synchronization to the master device.
3. The method according to clause 2, wherein the slave device is arranged to evaluate one or more parameters and determine when to transmit a request for synchronization in accordance with the one or more parameters.
4. The method according to clause 3, wherein the slave device is arranged to detect audio codec clock offset (Δ) data received from the master device over time, and wherein the slave device is arranged to determine a time between synchronization requests accordingly.
5. The method according to clause 4, wherein the slave device is arranged to increase synchronization request frequency in case the audio codec clock offset (Δ) is detected to vary over time by more than a specified value.
6. The method according to any of the preceding clauses, wherein the master device is arranged to collect audio codec clock offset (Δ) data transmitted to a plurality of slave devices, and to calculate a statistical measure based thereon.
7. The method according to clause 6, wherein the master device is arranged to adjust its clock according to said statistical measure.
8. The method according to clause 6 or 7, wherein the master device is arranged to detect audio codec clock offset (Δ) data transmitted to one slave device over time and to calculate a statistical measure for said slave device accordingly.
9. The method according to clause 8, wherein the master device is arranged to determine to disconnect said slave device from the network in response to said calculated statistical measure for said slave device.
10. The method according to any of clauses 6-9, wherein the master device is arranged to store data indicative of audio codec clock offset (Δ) data transmitted to a plurality of slave devices, such as a plurality of data transmitted to each of the plurality of slave devices over a period of time.
11. The method according to clause 10, wherein the master device is arranged to transmit said stored data to an external device.
12. The method according to clause 11, wherein the master device is arranged to transmit said stored data to one of the plurality of slave devices.
13. The method according to any of the preceding clauses, wherein the master device transmits synchronization information only upon request from a slave device.
14. The method according to any of the preceding clauses, comprising computing by said at least one slave devices at least one criterion value, and determining to transmit a request for synchronization if the criterion value exceeds a predetermined threshold.
15. The method according to any of the preceding clauses, wherein at least one of the slave devices requests synchronization by transmitting to the master device data indicating a snapshot of the Time Synchronization Function clock (T(to)) at a time (to) as well as the audio codec clock (As(to)) of the slave device at the same time (to).
16. An audio device comprising a processor and a network interface arranged to receive audio data via a computer network from a source and to playback an acoustic signal accordingly in a synchronized manner in response to synchronization information from a master device, wherein the processor is programmed to operate according to the method according to any of clauses 1-15.
17. A system comprising a plurality of devices according to clause 16, wherein a first device is arranged to playback a first audio channel (L) of the audio data, and wherein a second device is arranged to playback a second audio channel (R) of the audio data, such as the first device being a slave device and the second device being a master device, such as both of the first and second devices being slave devices.

## Claims

1. A method by a master device in a network of a plurality of separate devices including the master device and at least a slave device for synchronizing playback of audio and/or video from a source in the network, comprising:
receiving, from the slave device, data indicative of a slave audio codec clock As(to) at a slave reference time (to) related to a Time Synchronization Function time T(to), the slave audio codec clock being involved in transmitting audio in the network;
receiving, from the slave device, a request for synchronization information;
reading, at a master reference time (t₁), a master audio codec clock A_{M}(t₁) related to a Time Synchronization Function time T(t₁);
calculating an estimated slave audio codec clock A'ₛ(t₁) corresponding to the master reference time (t₁) based on a latency L calculated as L = T(t₁) - T(to), where t₁ > to, and A'ₛ(t₁) = A_{S}(t₀) + L;
calculating an estimated offset of audio codec clock (Δ) between the master device and the slave device in response to the calculated estimated slave audio codec clock (A'ₛ(t₁)) corresponding to the master reference time (t₁) and the master audio codec clock (A_{M}(t₁)), wherein the estimated offset Δ is calculated as Δ = A_{S}(t₀) + L - A_{M}(t₁); and
transmitting, in response to the request, the synchronization information comprising data based on the estimated offset of audio codec clock (Δ) to the slave device.

2. The method of claim 1, wherein the plurality of separate devices comprises a plurality of slave devices, and the method further comprises:
calculating, for each slave device of the plurality of slave devices, an estimated offset of audio codec clock (Δ) between the master device and each slave device;
estimating another slave device of the plurality of slave devices has an audio codec clock which provides a better match to the slave device than the master audio codec clock of the master device; and
appointing the another slave device as a new master device.

3. The method according to claim 2, further comprising:
collecting the estimated offset of audio codec clock (Δ) between the master device and each slave device; and
calculating a statistical measure based thereon.

4. The method according to claim 3, further comprising:
adjusting the master audio codec clock according to the statistical measure.

5. The method according to any of claims 2-4, further comprising:
storing data indicative of the estimated offset of audio codec clock (Δ) transmitted to the plurality of slave devices, including a plurality of data transmitted to each of the plurality of slave devices over a period of time.

6. The method according to claim 1-5, further comprising:
detecting the estimated offset of audio codec clock (Δ) transmitted to the slave device over time; and
calculating a statistical measure for the slave device based on the detected estimated offset of audio codec clock (Δ) over time.

7. The method according to claim 6, further comprising:
determining to disconnect the slave device from the network in response to the calculated statistical measure for the slave device.

8. The method according to claim 1, wherein the master device acts as the source in the network for synchronizing playback of audio and/or video.

9. The method according to claim 1, wherein the master device includes a TV set, and the slave device includes a speaker.

10. A computer-readable medium having instructions stored thereon, that, when executed on a computing device as a master device, cause the computing device to perform operations, the operations comprising:
receiving, from a slave device, data indicative of a slave audio codec clock A_{S}(t₀) at a slave reference time (to) related to a Time Synchronization Function time T(to), the slave audio codec clock being involved in transmitting audio in a network of a plurality of separate devices including the master device and at least the slave device for synchronizing playback of audio and/or video from a source in the network;
receiving, from the slave device, a request for synchronization information;
reading, at a master reference time (t₁), a master audio codec clock A_{M}(t₁) related to a Time Synchronization Function time T(t₁);
calculating an estimated slave audio codec clock A'ₛ(t₁) corresponding to the master reference time (t₁) based on a latency L calculated as L = T(t₁) - T(to), where t₁ > to, and A'ₛ(t₁) = A_{S}(t₀) + L;
calculating an estimated offset of audio codec clock (Δ) between the master device and the slave device in response to the calculated estimated slave audio codec clock (A'ₛ(t₁)) corresponding to the master reference time (t₁) and the master audio codec clock (A_{M}(t₁)), wherein the estimated offset Δ is calculated as Δ = A_{S}(t₀) + L - A_{M}(t₁); and
transmitting, in response to the request, the synchronization information comprising data based on the estimated offset of audio codec clock (Δ) to the slave device.

11. The computer-readable medium of claim 10, wherein the plurality of separate devices comprises a plurality of slave devices, and the method further comprises:
calculating, for each slave device of the plurality of slave devices, an estimated offset of audio codec clock (Δ) between the master device and each slave device;
estimating another slave device of the plurality of slave devices has an audio codec clock which provides a better match to the slave device than the master audio codec clock of the master device; and
appointing the another slave device as a new master device.

12. The computer-readable medium of claim 11, further comprising:
collecting the estimated offset of audio codec clock (Δ) between the master device and each slave device; and
calculating a statistical measure based thereon.

13. The computer-readable medium of claim 12, further comprising:
adjusting the master audio codec clock according to the statistical measure.

14. The computer-readable medium of claims 11-13, further comprising:
storing data indicative of the estimated offset of audio codec clock (Δ) transmitted to the plurality of slave devices, including a plurality of data transmitted to each of the plurality of slave devices over a period of time.

15. The computer-readable medium of claims 12-13, wherein the master device acts as the source in the network for synchronizing playback of audio and/or video.
